# EUROPEAN PATENT SPECIFICATION

(11) **EP 0 957 603 B1**
(45) Date of publication and mention of the grant of the patent: **09.11.2005**
(21) Application number: 99108770.1
(22) Date of filing: 03.05.1999
(51) Int. Cl.: H04J 3/16, H04Q 11/04

(54) **Integrated telecommunications line systems and cross-connect**
Integrierte Leitungssyteme und Cross Connect
Systèmes de lignes de télécommunication et commutateur intégrés

(30) Priority: 12.05.1998 GB 9809990
(43) Date of publication of application: 17.11.1999
(73) Proprietor: Nortel Networks Limited, St.Laurent, Quebec H4S 2A9 (CA)
(72) Inventor: Purse, Christopher Michael, Chelmsford, Essex CM1 2XN (GB); Nicholson, David John, Welwyn Garden City, Hertfordshire AL87XE (GB); Solheim, Alan, Kanata, Ontario K2M 1C4 (CA); DiPerna, Dino, Stittsville, Ontario K25 1R2 (CA); Tatar, Mohammed Ismael, Kanata, Ontario K2L P9 (CA); Betts, Malcolm Charles, Kanata, Ontario K2W 1A7 (CA); Martin, David, Nepean, Ontario K2J 1R3 (CA)
(74) Representative: Hermele, Daniel Stephen

(56) References cited:
- EP-A- 0 620 694
- WO-A-97/01897
- GB-A- 2 298 767
- GB-A- 2 324 687
- US-A- 4 394 541
- TOKIZAWA I ET AL: "ATM transport system architecture and field trial" GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1993, NEW YORK, NY, USA,IEEE, 29 November 1993 (1993-11-29), pages 1449-1453, XP010109824 ISBN: 0-7803-0917-0

## Description

This invention relates to telecommunications systems and in particular to the provision and operation of cross-connects in synchronous transport networks.

### BACKGROUND OF THE INVENTION

Traditionally, synchronous (SDH or SONET) transport networks incorporate backbones that have been designed using cross-connects as flexibility points linked by line systems. In European SDH networks, the primary function of the cross-connects in the backbone is VC4 management for routing and restoration. In North American SONET networks, 3x3 cross-connects serve a similar function to provide management at the sts-1 level.

In these networks, line systems comprise either;
unprotected 1+1 or 1:N protected line systems interconnecting cross-connects in a mesh arrangement; or
ring systems with either unidirectional (DPRing) or bi-directional (MS-SPRing) rings.

In Europe, the most common network strategy has been the use of the mesh arrangement with unprotected STM16 (2.5 Gbit/s) line systems. In North America, long distance transport employs meshing with 1:N OC48 (2.5 Gbit/s) line systems, while regional operating companies employ ring systems.

In a synchronous network, digital traffic is transported as the payload in virtual containers to which overheads are attached and which are then incorporated in frames. The international synchronous network standards define different combinations of virtual containers that can be used to fill the payload area of a frame. The process of loading containers and attaching overheads is repeated at a number of multiplexing levels

A description of a SONET cross connect is given by F G Noser in specification No. EP-A2-0 559 091. A description of a cross connect architecture for SDH signals is given by R Ahola et al. in specification No WO 95/32599.

With the constantly increasing traffic demand, operators are now installing higher capacity transport systems, the new standard being 10 Gbit/s which corresponds to the SDH STM64 standard or the SONET OC192 standard. The large increase in network bandwidth that is provided by these high capacity transport systems has introduced a consequent need for growth in the size of cross-connects, particularly in meshed networks. At a cross-connect, the incoming signal is demultiplexed into its components which are individually switched before being re-multiplexed for onward transmission. However, the cross-connect sizes that are now being demanded for these high capacity systems exceed the capabilities of the equipment suppliers. Using current technology, a cross-connect of the required capacity would require numerous interface shelves and a large amount of cross-site cabling between the line systems and the cross-connect. This lack of availability of a suitable cross-connect at an acceptable cost has placed constraints on the introduction of higher bit rate systems.

GB2298767 discloses a cross-connect node for a synchronous communications network. The cross-connect node has an interface unit for converting a traffic signal carried in a first synchronous communications network transmission format (SONET OC-12/STS-12) from the optical domain to the electrical domain and to de-multiplex it into a plurality of signals at a second, lower bit-rate transmission format (STS-1). Of the plurality of second transmission format signals, those that are to be switched are passed to a cross connection unit where they are switched whereas those of said plurality of second transmission format signals that are not to be switched are passed through the cross-connect node at the second transmission format bit-rate and then multiplexed up to the first transmission format bit-rate for onward transmission in the synchronous communications network. Consequently, all traffic signals received at the cross-connect node are de-multiplexed prior to dropping that part of the traffic to be switched and passing through that part that is not to be switched.

### SUMMARY OF THE INVENTION

An object of the invention is to minimise or to overcome this disadvantage.

A further object of the invention is to provide an improved cross-connect for a synchronous transport network.

A further object of the invention is to provide an improved method of handling traffic at a cross-connect in a synchronous network.

According to one aspect of the invention, there is provided a method of processing traffic carried on first and second paths at a cross-point in a synchronous communications network, the method including: transporting the traffic on each path in virtual containers encapsulated in a first transmission format of the synchronous communications network; for each said path, determining from overheads attached to the virtual containers the traffic that is to remain on that path through the cross-point and the traffic that is to be switched from that path at the cross-point, dropping only the traffic to be switched at the cross-point, de-multiplexing the traffic to be switched to a second transmission format of the synchronous communications network, said second transmission format having a lower bit-rate than the first transmission format; and switching the dropped traffic in a switching fabric of the cross-point; the method being characterised in that for each path the traffic remaining on that path is transmitted through the cross-point in the higher bit-rate first transmission format.

According to another aspect of the invention, there is provided a cross-connect node for processing traffic carried on first and second paths at a cross-point in a synchronous communications network, the cross connect node having: means for transporting the traffic on each path in virtual containers encapsulated in a first transmission format of the synchronous communications network; means for determining for each said path from overheads attached to the virtual containers the traffic that is to remain on that path through the cross-point and the traffic that is to be switched from that path at the cross-point, means for dropping only the traffic to be switched at the cross-point, means for de-multiplexing the traffic to be switched to a second transmission format of the synchronous communications network, said second transmission format having a lower bit-rate than the first transmission format; and a switching fabric for switching the dropped traffic at the cross-point; the cross connect node being characterised in being adapted to transmit the traffic remaining on each path through the cross-point in the higher bit-rate first transmission format.

In this system and method, traffic is loaded into appropriate virtual containers according to the route that it will take at a cross-point, i.e. to be switched from one path to another or to continue on the same path. Switching at the cross-connect is performed at the virtual container (VC4 or STS1) level.

By dropping out only the traffic that needs to be switched at the cross-point, the demand on the switching equipment is significantly reduced.

### BRIEF DESCRIPTION OF THE DRAWINGS

A preferred embodiment of the invention will now be described with reference to the accompanying drawings in which;
- Figure 1: is a schematic diagram of a synchronous transport network;
- Figure 2: shows for comparative purposes the general configuration of a conventional cross-connect arrangement.
- Figure 3: is a schematic diagram of an integrated line system/cross-connect according to a preferred exemplary embodiment of the invention;
- Figure 4: shows the integrated line system/cross-connect of figure 3 in further detail;
- Figure 5: illustrates the equipment configuration of the cross-connect of figures 3 and 4; and
- Figure 6: is a schematic diagram illustrating traffic paths through a node incorporating the cross connect of figures 3 and 4.

### DESCRIPTION OF PREFERRED EMBODIMENT

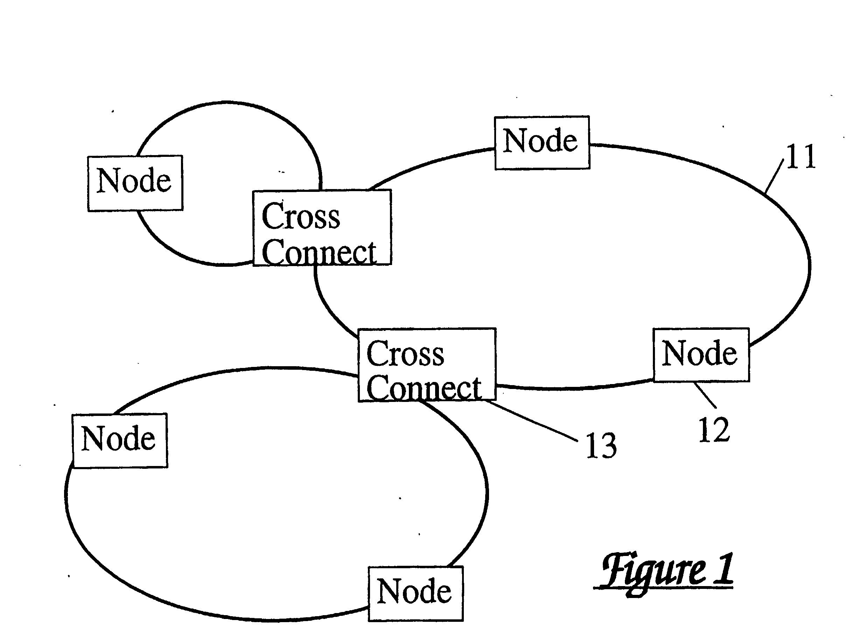

Referring first to figure 1 which is introduced for explanatory and comparative purposes, this shows a synchronous transport system in highly schematic form. As shown in figure 1, the network comprises a number of rings 11 each of which may have a number of nodes 12 and which are interconnected by cross-connects 13. Each ring node can receive synchronous traffic from either ring direction and the system thus provides path protection in the event of a failure at any one point in a ring. The cross-connects 13 provide both an interconnection and switching function to route traffic between adjacent rings or to drop traffic to the metropolitan and access networks at the node.

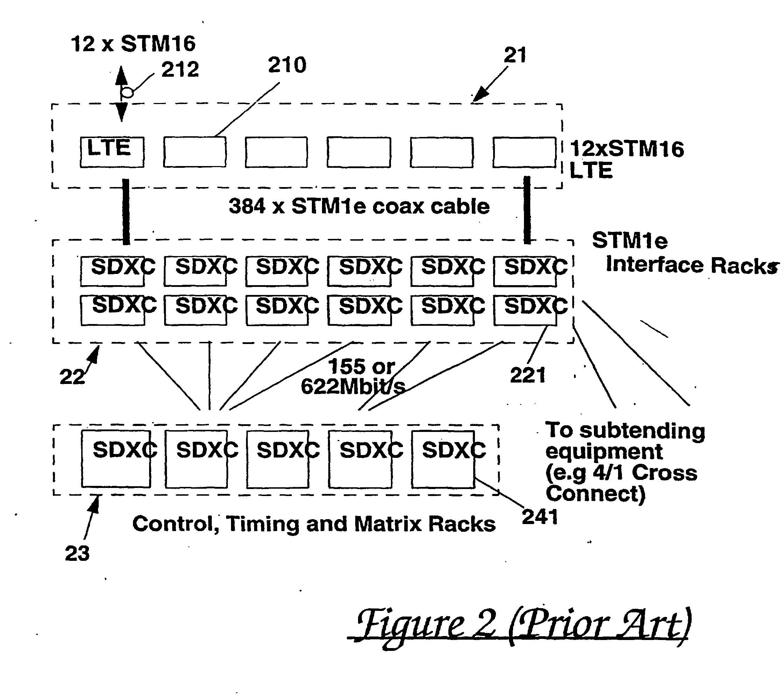

The construction of a conventional cross-connect site is shown in schematic form in figure 2 which is also introduced for explanatory and comparative purposes. For clarity, only the input half of the cross-connect is shown and it will be understood that the output half is a mirror image of the input. Further, although this figure is described below with particular reference to SDH terminology, it will be appreciated that the equivalent SONET terminology is equally applicable. The cross-connect site comprises line termination equipment (LTE) racks 21 incorporating a number of line trunk equipments 210 each of which terminates a number of e.g. STM16 channels so as to provide an interface between the optical transmission medium and the electrical switching medium. The line trunk equipment provides a demultiplexing function. In the example given of twelve STM16 channels, these will be demultiplexed down one hundred and ninety two STM1 channels which are fed via corresponding STM1e (STM1 electrical) coaxial cable links to the cross-connect interface racks 22, which effect conversion from STM1 to the cross-connect internal signalling and the switch matrix 24 comprising a further set of cross-connects 241. The switch matrix can connect any input channel to any output channel. After the STM1 channels have been switched by the matrix, they are multiplexed back up to STM16 for further transmission. It will be appreciated that a large volume of cross-site cabling will be required to provide the coupling between the LTEs and the interface racks, and that as higher transmission rates, e.g. STM16 and STM64 are introduced, this volume of cabling will become excessively large. Effectively, the system is concerned with demultiplexing the STM16 signals to access the cross-connect matrix.

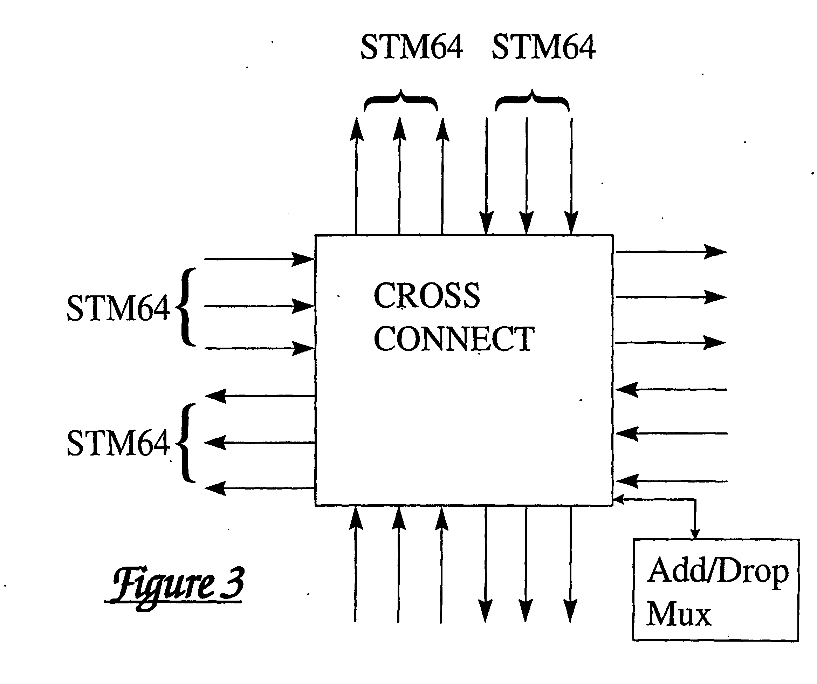

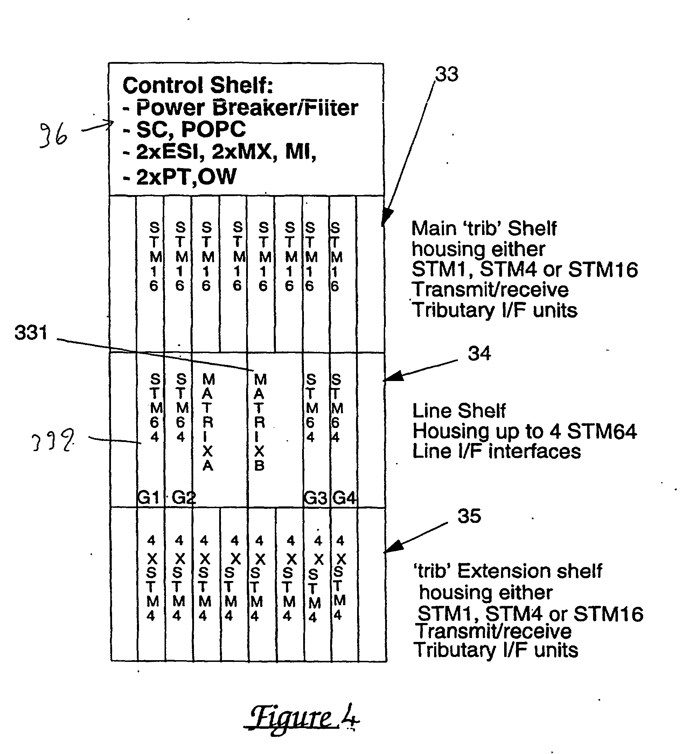

Figures 3 and 4 illustrate an integrated line system/cross connect according to a preferred embodiment of the invention for use in the network of figure 1. Referring first to figure 3, this shows the integrated line system/cross connect in highly schematic form. As shown, the cross connect has a number of incoming and outgoing e.g. STM 64 (or OC192) channels on first and second paths which are coupled via the cross connect. The paths may also carry a number of STM16 channels (not shown). Switching of traffic between the paths is performed at the VC4 level for SDH traffic or at the equivalent STS1 level for SONET traffic. Local traffic is added and dropped at the cross connect via an add/drop multiplexer.

Referring now to figure 4, this shows the construction of the integrated line system/cross connect in more detail. In essence, the arrangement comprises a shelf 33 housing STM1, STM4 or STM16 Transmit/receive I/F units. Typically, while STM1 is required, those external access shelves linked to the ISDX (Integrated Services Digital Exchange) via STM16 would be used. This is not to be confused with a transitional cross-point where all connections are at STM1. In this case, STM1 is needed only for traffic dropping down from the backbone to legacy equipment. The arrangement further comprises a line shelf 34 housing up to four STM64 line I/F interfaces, and the matrix, and a shelf 35 housing STM1, STM4 or STM16 Transmit/receive I/F units. The integrated line system/cross-connect shown in figure 4 is achieved by incorporating a large switching matrix 331 with several line terminating interfaces 332 within the same equipment.

Advantageously, multi-wavelength optical repeaters and wave division multiplex (WDM) couplers (not shown) may also be fitted to the equipment for applications where several systems share fibres. All of these system components are managed from the same management system (not shown) and can be controlled via control shelf 36 via the internal protected Ethernet channels.

To provide a high availability for the equipment, the switching matrix is 1+1 protected by comprising identical matrices (Matrix A and Matrix B) which perform the switching function in parallel and which are fed from dual separately fused power supply feeds. Fast hitless reconfiguration is provided by storing the switch connection maps in an on-line working memory and a number of off-line memories. OAM (operations, administration and maintenance) control or protection switching can trigger automatic exchanging of the maps. As will be described below, the effective size of the matrix as a double CLOS non-blocking matrix is five hundred and twelve VC4s. Thus, the equivalent of five hundred and twelve STM1 inputs can terminate at the equipment and be switched to any of five hundred and twelve STM1 or STM1 equivalent outputs. Typically, the terminations will be STM4, STM16, STM64 or combinations thereof.

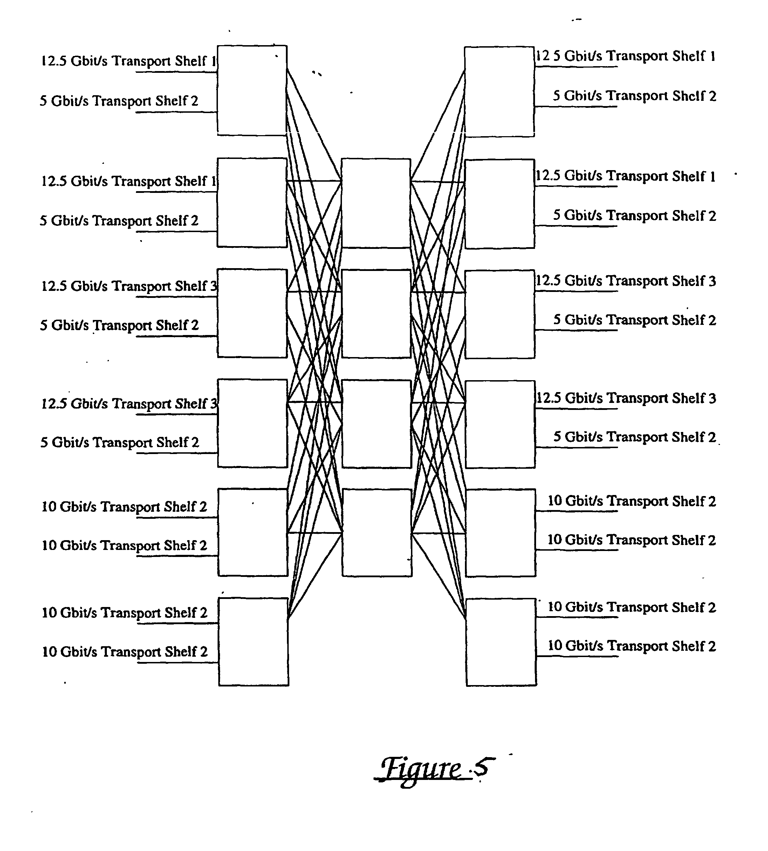

The switching matrix 331 is shown in further detail in figure 5, and is constructed from a three stage (Clos/Benes) array of e.g. 20 Gbit/s switching ASICs 311 in a 4,4,4 arrangement. For clarity, only switch matrix A is shown as switch matrix B is identical. The granularity of switching may be at the sts-1 level for SONET applications or at the equivalent VC4 level for SDH applications

Using e.g. 20 Gbit/s switches in stages I and III, and 40 Gbit/s switches in stage II, a double non-blocking matrix of five hundred and twelve STM1 (VC4) equivalent capacity is provided, i.e. five hundred and twelve VC4 inputs can terminate at the equipment and be individually switched each to any one of five hundred and twelve VC4 outputs. The VC4 virtual containers can arrive at the cross-connect via STM1, STM4, STM16 or STM64 interfaces with no necessity for separate line systems.

The switching matrix 331 performs the following functions:
Switching any input VC4 to any output VC4 under OAM control.
Reading SDH overhead data upon which protection switching decisions are made and for alarm and performance monitoring reporting.
Protection switching (SNCP, 1+1, 1:1, 1:N MSP and MS-SPRing).
Switching SDH overhead.

The line system/cross connect incorporates a range of traffic interface cards 35 (e.g. STM1, STM4, STM16 and STM64) which terminate SDH multiplex and regenerator sections. The VC4 payloads are extracted and sent via 622 Mbit/s synchronous buses to the switching matrix 331. The system further includes a control shelf arrangement 36 housing a shelf controller, a communications maintenance interface, dual internal communications controllers, a parallel telemetry unit, an order wire unit and an optional element manager.

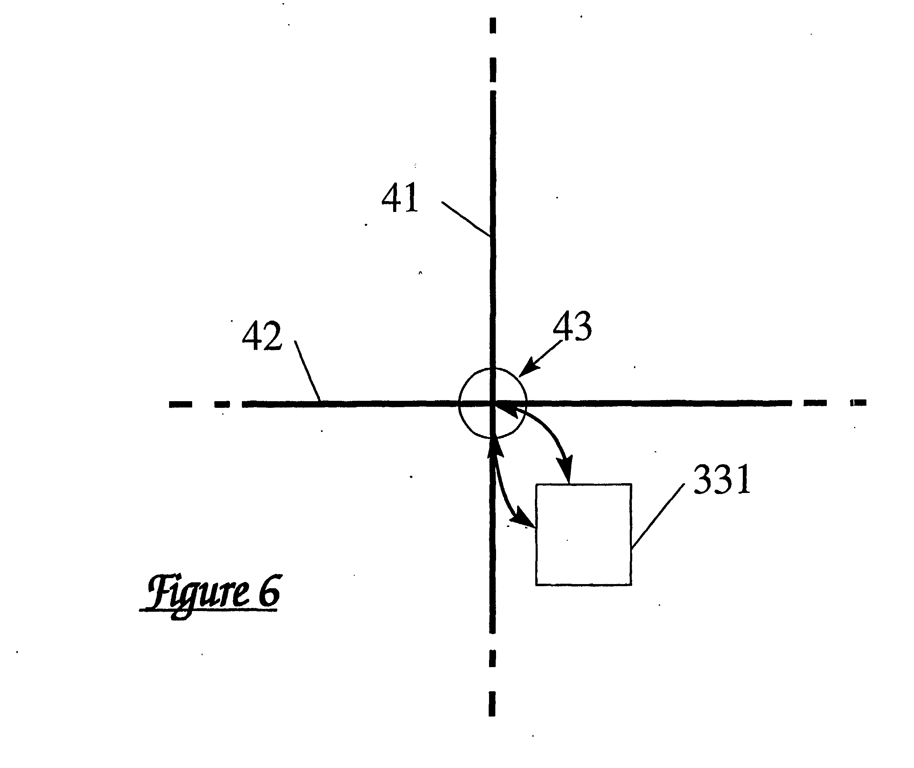

Referring now to figure 6, this illustrates the operation of a system node incorporating the cross connect of figures 3 and 4. The node 43 forms a cross-point between first and second traffic paths (41 and 42) intersecting at the node. The traffic on either path that is to be switched is dropped out at the node and is switched by the switch matrix 331. The straight-through traffic on each path is not dropped out but is allowed to remain on that path. The traffic is transported in virtual containers each of which contains either traffic that is to remain on that path at the cross-point or traffic that is to be switched to the other path at the cross-point. Thus, switching at the cross point can be effected at the virtual container level.

By demultiplexing or dropping out only the traffic that requires switching at the node, the switching load imposed on the switch matrix is considerably reduced thus allowing very high transmission rates, e.g. STM16 and STM64 to be employed without the need for an excessively large switching installation.

The arrangement of figures 3 to 5 can be employed to perform the following functions:
The cross-connection, line termination and amplifying functions of a mesh.
An add/drop multiplexer (ADM) which can interconnect two or more rings.

By the use of shared protection rings, add/drop multiplexers can be used to minimise the size of cross-connects required at flexibility points. Further, by incorporating the cross-connect function within the add/drop multiplexer, the problem of flexible interconnection of adjacent or stacked rings is overcome. The arrangement provides the network with a high degree of robustness. Provided dual homing between rings is used, any failure is restored typically within 50 milliseconds. This compares with a conventional recovery time which is of the order of seconds.
By way of comparison, in a conventional system this interconnection would require the provision at the interconnecting node A of two standard STM16 ADMs (add/drop multiplexers) to terminate the subtending ring, a cross-connect with 160xVC4 capacity and an STM 64 ADM. The STM16 ADMs would in turn each require sixteen STM1 tributary interface units, and the STM64 ADM would require one hundred and twenty eight STM1 tributary interface units. In order to set up a connection through the node A, the network elements (NEs) would need to be managed at this node. This would require the installation of either three hundred and twenty STM1 cables or eighty STM4 interfaces if all three NE types support STM4 tributaries.

In contrast, use of the integrated line system/cross-connect described above, with reference to figures 3 to 6, requires two pairs of STM16 tributary interface units for the subtending rings, one pair of STM 64 line interface units for the backbone ring, and an appropriate number of STM1/STM4 tributary interface units to connect traffic being added or dropped at the node. Preferably, the subtending rings and are dual homed to the backbone ring via respective STM64 nodes (not shown).

In a further application where the synchronous system incorporates nodes that require switching functions of more than five hundred and twelve VC4s, the equipment can be expanded using ports to provide an intra-station mesh or ring to provide a virtual cross-connect.

It will be appreciated that the technique is not limited to use with the synchronous STM16 or STM64 (or their North American SONET equivalents), but can of course be extended to accommodate higher levels of multiplexing and the corresponding higher bit rates when these become available.

## Claims

1. A method of processing traffic carried on first and second paths (41, 42) at a cross-point (43) in a synchronous communications network, the method including:
transporting the traffic on each path (41, 42) in victual containers encapsulated in a first transmission format of the synchronous communications network;
for each said path (41, 42), determining from overheads attached to the virtual containers the traffic that is to remain on that path through the cross-point (43) and the traffic that is to be switched from that path at the cross-point (43),
dropping only the traffic to be switched at the cross-point (43),
de-multiplexing the traffic to be switched to a second transmission format of the synchronous communications network, said second transmission format having a lower bit-rate than the first transmission format; and
switching the dropped traffic in a switching fabric (331) of the cross-point (43);
the method being **characterised in that** for each path (41, 42) the traffic remaining on that path is transmitted through the cross-point in the higher bit-rate first transmission format.

2. A method as claimed in claim 1, wherein said virtual containers are SDH VC-4 (SONET STS-1) containers.

3. A method as claimed in claim 1 or 2, wherein the first transmission format of the synchronous communications network is any one or a combination of STM-1 (STS-3/OC-3), STM-4 (STS-12/OC-12) or STM-64 (STS-192/OC-192).

4. A method as claimed in any of claims 1 to 3, wherein the switching of dropped traffic is performed via a three stage switch process.

5. A method as claimed in claim 4, wherein the switching of dropped traffic is performed at a SDH VC-4 (SONET STS-1) transmission rate.

6. A cross-connect node (33, 34, 35) for processing traffic carried on first and second paths (41, 42) at a cross-point (43) in a synchronous communications network, the cross connect node having:
means (332) for transporting the traffic on each path (41, 42) in virtual containers encapsulated in a first transmission format of the synchronous communications network;
means for determining for each said path (41, 42) from overheads attached to the virtual containers the traffic that is to remain on that path through the cross-point (43) and the traffic that is to be switched from that path at the cross-point (43),
means (33, 35) for dropping only the traffic to be switched at the cross-point (43),
means for de-multiplexing the traffic to be switched to a second transmission format of the synchronous communications network, said second transmission format having a lower bit-rate than the first transmission format; and
a switching fabric (331) for switching the dropped traffic at the cross-point (43);
the cross connect node being **characterised in** being adapted to transmit the traffic remaining on each path through the cross-point (43) in the higher bit-rate first transmission format.

7. A cross connect node as claimed in claim 6, wherein said virtual containers are SDH VC-4 (SONET STS-1) containers.

8. A cross connect node as claimed in claim 6 or 7, wherein the first transmission format of the synchronous communications network is any one or a combination of STM-1 (STS-3/OC-3), STM-4 (STS-12/OC-12) or STM-64 (STS-192/OC-192).

9. A cross connect node as claimed in any of claims 6 to 8, wherein the switching of dropped traffic is performed via a three stage switch process.

10. A cross connect node as claimed in claim 9, wherein the switching of dropped traffic is performed at a SDH VC-4 (SONET STS-1) transmission rate.

11. A communications system including a cross connect node (33, 34, 35) as claimed in any of claims 6 to 10.

## Patentansprüche

1. Verfahren zur Verarbeitung von Verkehr, der auf ersten und zweiten Pfaden (41, 42) an einem Kreuzverbindungspunkt (43) in einem synchronen Kommunikations-Netzwerk übertragen wird, wobei das Verfahren Folgendes einschließt:
Transportieren des Verkehrs auf jedem Pfad (41, 42) in virtuellen Containern, die in einem ersten Übertragungsformat des synchronen Kommunikations-Netzwerkes eingekapselt sind;
für jeden der genannten Pfade (41, 42), Bestimmen, aus den an die virtuellen Container angefügten Zusatzinformationen, des Verkehrs, der auf dem Pfad durch den Kreuzverbindungspunkt (43) verbleiben soll, und des Verkehrs, der von diesem Pfad an dem Kreuzverbindungspunkt (43) vermittelt werden soll;
Abzweigen lediglich des Verkehrs, der an dem Kreuzverbindungspunkt (43) vermittelt werden soll;
Demultiplexieren des zu vermittelnden Verkehrs auf ein zweites Übertragungsformat des synchronen Kommunikations-Netzwerkes, wobei das zweite Übertragungsformat eine niedrigere Bitrate als das erste Übertragungsformat hat; und
Vermitteln des abgezweigten Verkehrs in einer Vermittlungsstruktur (331) des Kreuzverbindungspunktes (43);
wobei das Verfahren **dadurch gekennzeichnet ist, dass** für jeden Pfad (41, 42) der auf diesem Pfad verbleibende Verkehr durch den Kreuzverbindungspunkt in dem die höhere Bitrate aufweisenden ersten Übertragungsformat übertragen wird.

2. Verfahren nach Anspruch 1, bei dem die virtuellen Container SDH VC-4-(SONET STS-1-) Container sind.

3. Verfahren nach Anspruch 1 oder 2, bei dem das erste Übertragungsformat des synchronen Kommunikations-Netzwerkes eines oder eine Kombination von STM-1 (STS-3/OC-3), STM-4 (STS-12/OC-12) oder STM-64 (STS-192/OC-192) ist.

4. Verfahren nach einem der Ansprüche 1-3, bei dem die Vermittlung von abgezweigtem Verkehr über einen dreistufigen Vermittlungsprozess ausgeführt wird.

5. Verfahren nach Anspruch 4, bei dem die Vermittlung von abgezweigtem Verkehr bei einer SDH VC-4 (SONET STS-1) Übertragungsrate ausgeführt wird.

6. Kreuzverbindungs-Knoten (33, 34, 35) zur Verarbeitung von Verkehr, der auf ersten und zweiten Pfaden (41, 42) an einem Kreuzverbindungs-Punkt (43) in einem synchronen Kommunikations-Netzwerk übertragen wird, wobei der Kreuzverbindungs-Knoten Folgendes aufweist:
Einrichtungen (332) zum Transport des Verkehrs auf jedem Pfad (41, 42) in virtuellen Containern, die in einem ersten Übertragungsformat des synchronen Kommunikations-Netzwerkes eingekapselt sind;
Einrichtungen zur Bestimmung, für jeden der Pfade (41, 42), aus den an die virtuellen Container angefügten Zusatzinformationen, des Verkehrs, der auf dem Pfad durch den Kreuzverbindungs-Punkt (43) verbleiben soll, und des Verkehrs, der von diesem Pfad an den Kreuzverbindungs-Punkt (43) vermittelt werden soll;
Einrichtungen (33, 35) zum Abzweigen lediglich des Verkehrs, der an dem Kreuzverbindungs-Punkt (43) zu vermitteln ist;
Einrichtungen zum Demultiplexieren des zu vermittelnden Verkehrs auf ein zweites Übertragungsformat des synchronen Kommunikations-Netzwerkes, wobei das zweite Übertragungsformat eine niedrigere Bitrate als das erste Übertragungsformat hat; und
eine Vermittlungsstruktur (331) zum Vermitteln des abgezweigten Verkehrs an dem Kreuzverbindungs-Punkt (43);
wobei der Kreuzverbindungs-Knoten **dadurch gekennzeichnet ist, dass** er so ausgebildet ist, dass er den auf jedem Pfad verbleibenden Verkehr durch den Kreuzverbindungs-Punkt (43) in dem die höhere Bitrate aufweisenden ersten Übertragungsformat überträgt.

7. Kreuzverbindungs-Knoten nach Anspruch 6, bei dem die virtuellen Container SDH VC-4 (SONET STS-1-) Container sind.

8. Kreuzverbindungs-Knoten nach Anspruch 6 oder 7, bei dem das erste Übertragungsformat des synchronen Kommunikations-Netzwerkes eines oder eine Kombination von STM-1 (STS-3/OC-3), STM-4 (STS-12/OC-12) oder STM-64 (STS192/OC-192) ist.

9. Kreuzverbindungs-Knoten nach einem der Ansprüche 6 bis 8, bei dem das Vermitteln des abgezweigten Verkehrs über einen dreistufigen Vermittlungsprozess ausgeführt wird.

10. Kreuzverbindungs-Knoten nach Anspruch 9, bei dem das Vermitteln des abgezweigten Verkehrs mit einer SDH VC-4 (SONET STS-1) Übertragungsrate ausgeführt wird.

11. Kommunikationssystem, das einen Kreuzverbindungs-Knoten (33, 34, 35) nach einem der Ansprüche 6 bis 10 einschließt.

## Revendications

1. Procédé pour traiter le trafic effectué sur des premier et second chemins (41, 42) à un point de croisement (43) dans un réseau de communication synchrone, le procédé comprenant les étapes consistant à :
transporter le trafic sur chaque chemin (41, 42) dans des conteneurs virtuels encapsulés dans un premier format de transmission du réseau de communication synchrone ;
pour chacun desdits chemins (41, 42), déterminer à partir de surdébits liés aux conteneurs virtuels le trafic qui doit rester sur ce chemin à travers le point de croisement (43) et le trafic qui doit être commuté à partir de ce chemin au point de croisement (43),
dériver seulement le trafic devant être commuté au point de croisement (43),
démultiplexer le trafic devant être commuté vers un second format de transmission du réseau de communication synchrone, ledit second format de transmission ayant un taux de bit inférieur à celui du premier format de transmission ; et
commuter le trafic dérivé dans une matrice de commutation (331) du point de croisement (43) ;
le procédé étant **caractérisé en ce que**, pour chaque chemin (41, 42), le trafic restant sur ce chemin est transmis à travers le point de croisement (43) dans le premier format de transmission avec un taux de bit supérieur.

2. Procédé selon la revendication 1, dans lequel lesdits conteneurs virtuels sont des conteneurs SDH VC-4 (SONET STS-1).

3. Procédé selon la revendication 1 ou 2, dans lequel le premier format de transmission du réseau de communication synchrone est un format parmi un des formats suivants STM-1 (STS-3/OC-3), STM-4 (STS-12/OC-12) ou STM-64 (STS-192/OC-192) ou une combinaison de ceux-ci.

4. Procédé selon l'une quelconque des revendications 1 à 3, dans lequel la commutation du trafic dérivé est effectuée par l'intermédiaire d'un processus de commutation à trois étapes.

5. Procédé selon la revendication 4, dans lequel la commutation du trafic dérivé est effectuée à un taux de transmission SDH VC-4 (SONET STS-1).

6. Noeud de répartition (33, 34, 35) pour traiter un trafic effectué sur des premier et second chemins (41, 42) à un point de croisement (43) dans un réseau de communication synchrone, le noeud de répartition ayant :
des moyens (332) pour transporter le trafic sur chaque chemin (41, 42) dans des conteneurs virtuels encapsulés dans un premier format de transmission du réseau de communication synchrone ;
des moyens pour déterminer, pour chacun desdits chemins (41, 42), à partir de surdébits liés aux conteneurs virtuels le trafic qui doit rester sur ce chemin à travers le point de croisement (43) et le trafic qui doit être commuté à partir de ce chemin au croisement (43),
des moyens (33, 35) pour dériver seulement le trafic devant être commuté au point de croisement (43),
des moyens pour démultiplexer le trafic devant être commuté vers un second format de transmission du réseau de communication synchrone, ledit second format de transmission ayant un taux de bit inférieur à celui du premier format de transmission ; et
une matrice de commutation (331) pour commuter le trafic dérivé au point de croisement (43) ;
le noeud de répartition étant **caractérisé en ce qu'**il est adapté pour transmettre le trafic restant sur chaque chemin à travers le point de croisement (43) dans le premier format de transmission avec le taux de bit supérieur.

7. Noeud de répartition selon la revendication 6, dans lequel lesdits conteneurs virtuels sont des conteneurs SDH VC-4 (SONET-STS-1).

8. Noeud de répartition selon la revendication 6 ou 7, dans lequel le premier format de transmission du réseau de communication synchrone est un format parmi un des formats suivants STM-1 (STS-3/OC-3), STM-4 (STS-12/OC-12) ou STM-64 (STS-192/OC-192) ou une combinaison de ceux-ci.

9. Noeud de répartition selon l'une quelconque des revendications 6 à 8, dans lequel la commutation de trafic dérivé est effectuée par l'intermédiaire d'un processus de commutation à trois étapes.

10. Noeud de répartition selon la revendication 9, dans lequel la commutation de trafic dérivé est effectuée à un taux de transmission SDH VC-4 (SONET-STS-1).

11. Système de communication comprenant un noeud de répartition (33, 34, 35) selon l'une quelconque des revendications 6 à 10.
